Europäisches Patentamt

(19) European Patent Office

Office européen des brevets

(11) Publication number: **0 165 678**
**A1**

(12) # EUROPEAN PATENT APPLICATION

(21) Application number: 85303015.3

(22) Date of filing: 29.04.85

(51) Int. Cl.⁴: **F 16 G 5/16**

(30) Priority: 29.05.84 US 614660

(43) Date of publication of application:
27.12.85 Bulletin 85/52

(84) Designated Contracting States:
DE FR GB IT NL SE

(71) Applicant: GENERAL MOTORS CORPORATION
General Motors Building 3044 West Grand Boulevard
Detroit Michigan 48202(US)

(72) Inventor: Cataldo, Roy S.
20230 Plantation
Birmingham Michigan 48010(US)

(72) Inventor: Hall, Arlis
1126 Grace
Rochester Michigan 48063(US)

(74) Representative: Breakwell, John Neil Bower et al,
GM Patent Section Luton Office (F6) P.O. Box No. 3
Kimpton Road
Luton Beds. LU2 OSY(GB)

(54) V-Belt structure.

(57) A push-type metal V-belt is formed from a single strip of sheet metal. The strip (10) is formed and folded such that the lateral faces (20) between the converging outer drive edges (18) are tapered to have a reduced thickness at the inner fold (16). The formed strip also has lateral slots (22,24) in which, after folding, continuous metal bands (30) are disposed for maintaining the belt in a continuous-loop configuration.

Fig.5

EP 0 165 678 A1

Croydon Printing Company Ltd.

## V-BELT STRUCTURE

This invention relates to a push-type metal V-belt as specified in the preamble of claim 1, for example as disclosed in GB-A-655 173.

Prior-art V-belts are known to use either a constant-thickness folded strip or individual drive blocks in their construction. The V-belts using a constant-thickness strip, as exemplified by the said GB-A-655 173, have a large "scrub" distance between the guide or retaining bands and the geometric pitch. This generates relatively large friction losses, and limits the smallest diameter at which the belts can operate successfully. To solve this problem, the known prior art also utilizes separate drive blocks with tapered faces. This requires individual forming and handling of each drive block, thus increasing cost and manufacturing complexity.

The present invention seeks to reduce the cost and manufacturing complexity while overcoming the high friction losses of the single-strip folded V-belt.

To this end, a push-type metal V-belt in accordance with the present invention is characterised by the features specified in the characterising portion of claim 1.

Thus, with the present invention, the formation of a lateral surface, between the drive edges, with a tapered configuration provides design control of the pitch line: this permits the pitch line to be very close to the continuous band members, thereby reducing relative motion therebetween. The tapered configuration also permits the use of these belts successfully at smaller pulley diameters, inasmuch as the sections of the fan-folded metal strip have reduced thickness at the inner radius.

The present invention also improves belt operation by reducing noise, since each drive segment may be made thinner than when individual drive blocks are used, without detriment to the lateral load capacity of the belt.

The metal V-belt may be made of steel.

In the drawing:

Figure 1 is a fragmentary bottom view of a preferred embodiment of a formed metal strip for the production of a push-type metal V-belt in accordance with the present invention;

Figure 2 is a view along the line 2--2 of Figure 1, in the direction of the arrows;

Figure 3 is a side view of a portion of the metal strip shown in Figures 1 and 2, after folding;

Figure 4 is a view along the line 4--4 of Figure 3, in the direction of the arrows; and

Figure 5 is a side view of a portion of a V-belt in accordance with the present invention, and a pulley arrangement.

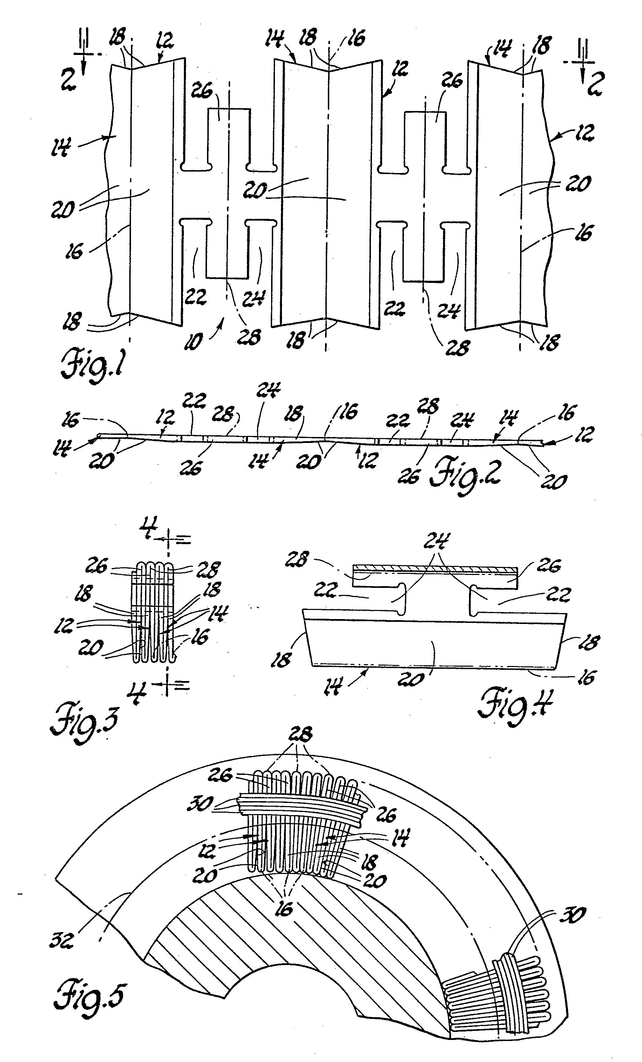

With reference now to the drawing, wherein like characters represent the same or corresponding parts throughout the several views, there is seen in Figure 1 a metal strip, generally designated 10, which is formed such that when the strip is folded the configuration shown in Figures 3 and 4 will be achieved. The metal strip 10 has adjacent drive portions 12 and 14 formed on opposite sides of a common fold line 16. The drive portions 12 and 14 have drive edges 18 and lateral faces 20.

As is seen in Figures 2 and 3, the lateral faces 20 are formed with a tapered configuration such that the faces become narrower as they approach the fold line 16. The drive portions 12 and 14 are formed in pairs along a single metal strip, with the pairs of drive portions 12 and 14 separated by a pair of band slots 22 and 24 and a central bar 26. The central bar 26 has a fold line 28. In the folded configuration, the central bar 26 and the band slots 22 and 24 co-operate to form a T-shaped structure which houses a plurality of continuous metal bands 30, as shown in Figure 5.

As is seen in Figure 3, the fold line 28 establishes an outer-radius fold line, and the fold line 16 establishes an inner-radius fold line. Also, as seen in Figures 3 and 5, the tapered configuration of the lateral faces 20 establishes a tapered configuration in the fan-folded metal strip, which will permit the metal drive belt and pulley combination to have a pitch diameter at 32. With the pitch diameter at 32, the "scrub" distance between the pitch diameter 32 and the metal bands 30 is minimal. Likewise, the friction losses are also minimal when the pulley ratio is other than 1:1.

It is well known that push-type metal V-belts utilizing a continuous metal band such as 30 have a speed differential or scrubbing action between the individual drive portions and the metal bands when the pulley ratio is other than 1:1. Prior to the invention disclosed herein, fan-folded belt configurations had a uniform thickness to each drive portion, thus causing a large scrub distance between the geometric pitch and the metal band or retaining band location, since such uniform-thickness members tend to pivot about the inner end of the drive face.

The present invention significantly reduces this scrub distance, resulting in improved drive belt efficiency.

Although the metal V-belt in accordance with the present invention is designated as being a push-type V-belt, and is primarily intended for push-type operation, the V-belt could alternatively be utilised in a pull-type configuration.

Claims:

1. A push-type metal V-belt comprising a single metal strip (10) fan-folded to provide outer folded edges (28), inner folded edges (16) and drive portions (12,14) between the inner and outer folded edges (16 and 28), the inner folded edges (16) being formed with a smaller radius than the outer folded edges (28), adjacent drive portions (12, 14) including lateral faces (20) which are interconnected at an inner folded edge (16), and slots (22,24) in the metal strip (10) for the reception of endless band means (30) effective to maintain the fan-folded metal strip (10) in a continuous loop when the V-belt is operated with V-grooved pulleys, characterised in that the lateral faces (20) of the adjacent drive portions (12,14) have a tapered configuration from a pitch diameter (32) thereof to the inner folded edge (16) such that the drive portions (12,14) have converging side surfaces when viewed laterally, the slots in the drive portions (12,14) comprise lateral slots (22,24) formed between the outer folded edge (28) and the pitch diameter (32) thereof, and the endless band means comprises continuous metal band members (30) disposed in the lateral slots (22,24).

2. A push-type metal V-belt according to claim 1, characterised in that the drive portions (12,14) of the V-belt comprise drive block portions.

3. A push-type metal V-belt according to claim 1 or 2, characterised in that the lateral faces (20) of the adjacent drive portions (12,14) have a tapered configuration as aforesaid when viewed in longitudinal section.

1 / 1

0165678

Fig.1

Fig.2

Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y,D | GB-A- 655 173 (PETER) * Page 1, lines 55-64; page 2, lines 45-52; figures 3,30,33 * | 1-3 | F 16 G 5/16 |
| Y | GB-A-2 013 116 (VOLVO) * Page 1, lines 81-101; figures 3,4 * | 1-3 | |

TECHNICAL FIELDS
SEARCHED (Int. Cl.4)

F 16 G

The present search report has been drawn up for all claims

| Place of search | Date of completion of the search | Examiner |
|---|---|---|
| THE HAGUE | 05-09-1985 | BARON C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82